# EUROPEAN PATENT SPECIFICATION

(11) **EP 4 321 711 B1**
(45) Date of publication and mention of the grant of the patent: **20.08.2025**
(21) Application number: 22382771.8
(22) Date of filing: 09.08.2022
(51) Int. Cl.: E04H 17/16, B01D 29/35, B01D 29/23, B01D 35/30, F04D 29/70

(54) **KIT FOR PERIMETER FENCING**
KIT ZUR UMZÄUNUNG
KIT POUR LA CLÔTURE

(43) Date of publication of application: 14.02.2024
(73) Proprietor: HEBEI FORTUNE TRADE CO., LTD, Shijiazhuang, Hebei (CN)
(72) Inventor: SHI, Jingwen, Shijiazhuang, Hebei (CN)
(74) Representative: Herrero & Asociados, S.L.

(56) References cited:
- EP-A1- 3 492 675
- BE-B1- 1 025 313
- BE-B1- 1 025 714

## Description

### Object of the invention

The present invention falls within the technical field of enclosures, as well as within that of rod or tube assemblies, and relates in particular to a kit for perimeter fencing of areas.

### Background of the invention

A perimeter fence is an enclosed security system that separates two spaces by means of a mesh in order to protect and demarcate the inner and outer boundary of these spaces.

Among the different types of perimeter fencing, the so-called rigid panels are known. These are galvanized wire panels characterised by their rigidity, strength and elegance. These galvanized panels can also be plastic-coated, offering a wide range of colours, with green and white being the most common colours. Their rigidity and solidity offer high protection and durability.

It is relatively easy to assemble and can be installed by the user himself. This type of fence with rigid panels is very common for perimeter fencing in gardens, swimming pools, schools and residential areas.

In the current state of the art, several patent documents are known relating to perimeter enclosures made of rigid panels with different characteristics. For example, European patent EP2924193 relates to a fence intended to enclose an area of land, comprising: a frame of vertically installed posts, arranged parallel and spaced apart and fixed by means of one or more transverse slats; wherein a series of slats are provided between said posts, wherein one or more slats are supported by a fixing element, said fixing element comprising a suspension corresponding to said transverse slat and a support leg corresponding to a lower end of a cover slat; as well as a kit and method for installing said fencing.

Patent EP3502379 relates to a kit suitable for assembling a garden fence comprising a wire grid formed by interconnected longitudinal and transverse wires and a series of slats which can be arranged longitudinally between the longitudinal wires of said wire grid, said kit comprising: a series of slats of length LL; a series of support brackets for suspending said slats from said cross wires; two or more top profile segments with a length LP, wherein the length LP is less than the length LL; and one or more connecting elements for, in use, aligning a first top profile segment with an adjacent second top profile segment.

A final example can be found in the European patent document EP3981936, relating to a support bracket for supporting a slat of a wire garden panel of the type constructed from a wire mesh with vertical wires between which the slats are arranged and horizontal cross wires, the support bracket being realized as a profile with a hook-shaped part in which the support bracket can be hooked onto a transverse wire and a support part for supporting a slat, wherein the support part consists substantially of a beam-like element.

Document EP3492675 discloses a device for fixing slats to a rigid mesh panel that comprises a profile forming a slat receiving part being able to support , in use, the lower ends of slats and several fixing parts, which are carried by the bottom of the profile, at a distance from the vertical wall of the slat receiving part so as to also allow the reception of the lower end of at least one slat between the fixing part and said vertical wall, comprising fixing means for fixing the profile to a horizontal wire of the rigid mesh panel.

Document BE1025714 discloses a kit suitable for composing a garden wire panel composed of a wire grid formed by interconnected longitudinal wires and transverse wires and a series of slats provided longitudinally between the longitudinal wires in said wire grid, wherein the kit comprises two shaped sections one or more transverse profiles being longitudinal elements with a transverse section, wherein the transverse section comprises two legs, wherein both ends of the legs are provided with a support foot, and one or more support profiles, being longitudinal elements with a transverse section, wherein the transverse section comprises two legs, wherein the distance of the ends of the legs of said support profile corresponds to the distance between the support feet of said transverse profile.

Finally, document BE1025313 discloses a kit suitable for assembling a garden wire panel comprising (i) a wire grid formed by interconnected longitudinal wires and cross wires and (ii) a series of slats provided longitudinally between the longitudinal wires in said wire grid, said kit comprising: (i) a set of slats, (ii) a set of support brackets for suspending said slats from said transverse wires, (iii) one or more top profiles, and (iv) wherein said top profiles are double-walled.

### Description of the invention

The subject matter of the invention consists of a kit for perimeter fencing of enclosures according to claim 1.

The base frame is intended to act as a supporting element of the kit, forming a vertical support base on the ground. As already mentioned, it is made up of a plurality of vertical and horizontal metal rods equidistant from each other, linked and interlaced to form a closed and rigid mesh.

The frame has a lower support base and an upper end. The lower base includes elements for supporting and stabilizing the frame on the ground, while the upper end incorporates coupling elements for the closing blades, as well as V-shaped crimps.

The locking slats are intended to be fitted on the base frame, vertically oriented and arranged between consecutive vertical rods, to form an opaque barrier in order to prevent vision through the enclosure. The slats are inserted at the upper end of the frame and slide along the frame until they butt against the lower end.

The slats have coupling elements, preferably in the form of flanges, projections or similar, which help the slats to slide and fix them to the frame rods once the desired position has been reached.

The locking profiles are continuous profiles that close the upper and lower locking slats, taking advantage of a series of interior projections to fit into the horizontal rods located at the upper and lower ends of the frame's mesh. The locking profiles are continuous, i.e. they are long enough to cover a certain length of the fencing and can be attached to several slats with the same profile.

Each of the transverse reinforcing beams is formed from a V-shaped profile. This profile is configured for insertion into one of the V-shaped crimps of the base frame to hold the locking slats in vertical position. Each of the wings of the profile incorporates an intermediate angle and a reduction in wall thickness. Thus, when this profile is inserted into the V-crimp, this part acts as a spring to facilitate the operation.

The lower clips help to fix, adjust and hold in a vertical position, on a horizontal rod at the lower end of the frame, the respective lower ends of each of the locking slats. The retention, which allows a certain elasticity, is made by means of two flat surfaces facing each other to retain one side of the slat. In this clip, the elasticity is achieved only in the vertical insertion direction of the slat, as it comprises two flat surfaces facing each other.

Thus, each of the clips has means for coupling to a lower horizontal rod, these means consisting of a space whose cross-section is partially circular, with two flexible pins that allow it to fit onto the horizontal rod. The means for fitting onto the slats take the form of flat flexible tabs that extend upwards towards the vertical locking slat.

The width of these clips is short, in contrast to the locking profiles which have a continuous length to attach to several slats, so that at least one clip is provided for each locking slat, in order to be versatile and thus facilitate a fast and safe assembly of the entire enclosure.

An additional advantage of this clip compared to existing clips on the market is that it is symmetrical. Therefore, it is not necessary to identify which side faces inwards/outwards, avoiding errors and mishaps during assembly.

In an alternative example of the kit for perimeter fencing of enclosures, the lower locking and fastening element consists of a locking profile similar to the one used at the upper end of the vertical locking slats.

### Description of the drawings

In order to complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:
Figure 1.- Shows a perspective view of the kit for perimeter fencing of enclosures, showing details of its various elements.
Figure 2.- Shows a perspective view of the base frame.
Figure 3.- Shows a perspective view of a vertical locking slat.
Figure 4.- Shows a front view of the slat of figure 3.
Figure 5.- Shows a perspective view of an upper horizontal locking profile.
Figure 6.- Shows a front view of the profile of figure 5.
Figure 7.- Shows a perspective view of a horizontal reinforcement beam.
Figure 8.- Shows a front view of the beam of figure 7.
Figure 9.- Shows a perspective view of a lower clip.
Figure 10.- Shows a front view of the clip of figure 9.
Figure 11.- Shows a first stage of the assembly sequence of the kit for perimeter fencing.
Figure 12.- Shows a second stage of the assembly sequence.
Figure 13.- Shows a third stage of the assembly sequence.

### Preferred embodiment of the invention

A detailed explanation of an example of a preferred embodiment of the subject matter of the present invention is given below with the aid of the figures referred to above.

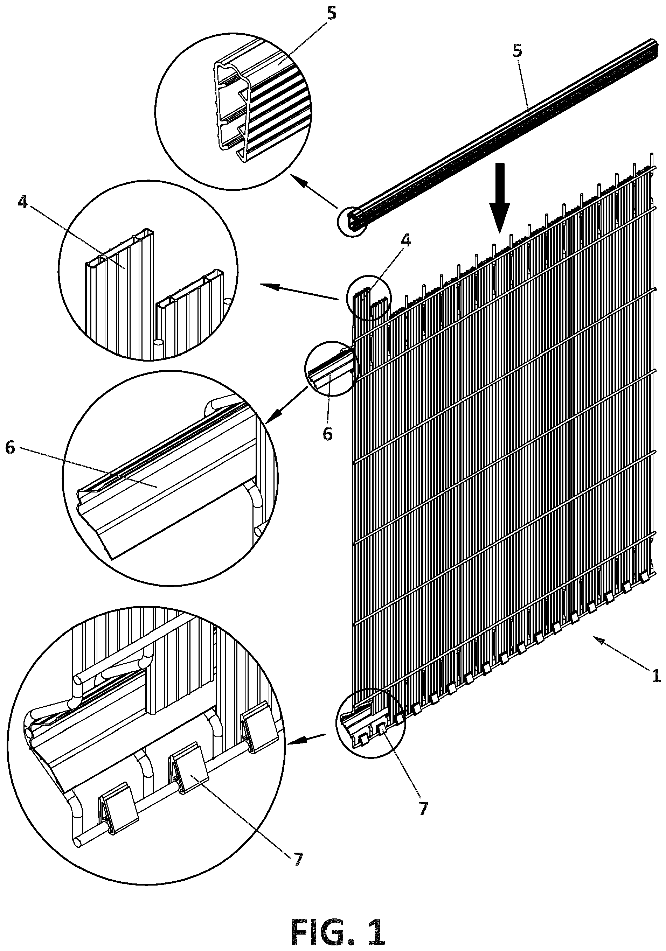

The kit for perimeter fencing of enclosures described, shown in figure 1, basically comprises the following elements:
- a base frame (1), consisting of a rigid mesh made up of a plurality of vertical rods (2) and horizontal rods (3) interlaced and linked together;
- vertical locking slats (4), which can be inserted into the frame (1);
- horizontal locking profiles (5) for locking and securing the upper ends of the locking slats (4);
- transverse reinforcement beams (6), which can be attached transversely to the locking slats (4) and to the frame (1); and
- lower locking and fastening elements for connecting the respective lower ends of the locking slats (4) to the lower end of the frame (1).

According to the invention, the lower locking and fastening elements consist of elastic clips (7), for clipping the lower ends of the locking slats (4) to a horizontal rod (3) at the lower end of the frame (1).

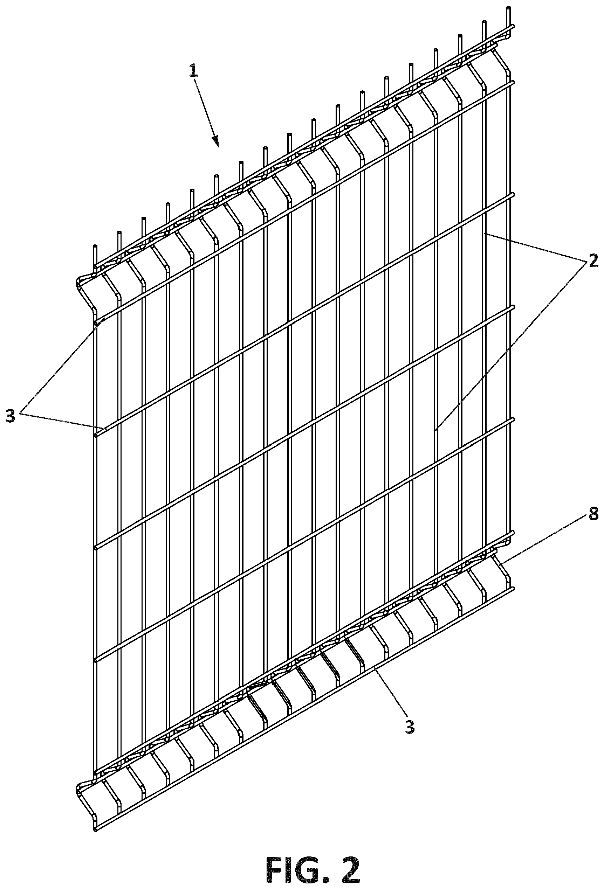

Figure 2 shows a detailed view of a base frame (1). As can be seen, this element acts as a support for the kit, and has a base (8) in the form of legs for support and stabilization on the ground. The vertical (2) and horizontal rods (3) form a rigid mesh.

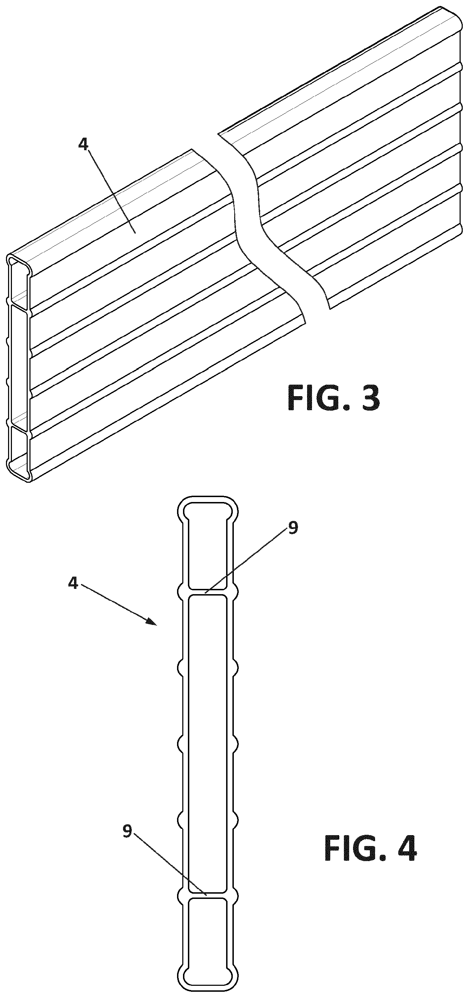

Figures 3 and 4 show views of a preferred embodiment of one of the locking slats (4). The locking slats (4) are vertically attachable to the frame (1) and arranged between the vertical rods (2) to form a barrier that prevents vision through the frame (1). The locking slats (4) are inserted vertically at the upper end of the frame (1) and slide along it, guided by the vertical rods (2) until they are fitted flush with the lower base (8). The locking slats (4) have a grooved external surface and an internal housing in which transverse partitions (9) are arranged.

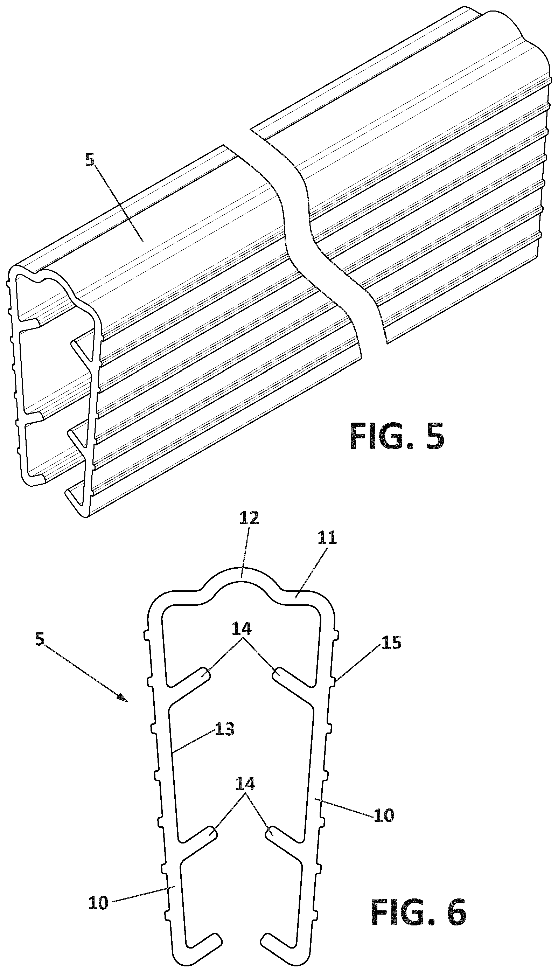

As for the locking profiles (5), which close the assembly at the top, are shown in figures 5 and 6. As can be seen, each of them comprises two side wings (10) inclined inwards, linked together at their respective upper ends by means of a perpendicular central section (11) which has a convex curved area (12) in its central sector. The lower ends are free and face each other, forming an opening for coupling the locking profiles (5) with the upper ends of the locking slats (4).

Each side wing (10) has an inner face (13) from which oblique flanges (14) start, configured for coupling with the horizontal rods (3) of the frame (1). The external face (15) of each side flange (9) has a grooved surface to facilitate handling.

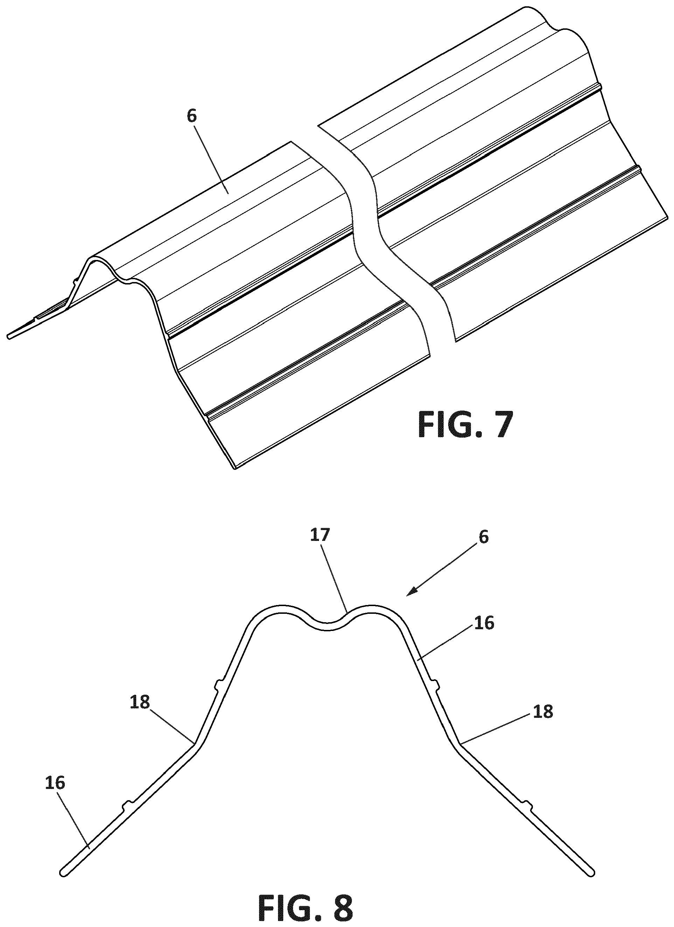

The transverse reinforcement beams (6), shown in figures 7 and 8, are formed from a V-shaped profile, comprising two symmetrical skids (16), inclined outwards and joined together at one end by means of a convex curved web (17). Each of the reinforcement beams (16) has an intermediate angle (18) and a reduction in its thickness, which act synergistically as a spring to facilitate the coupling of the reinforcement beams (6) with the locking slats (4) and the frame (1).

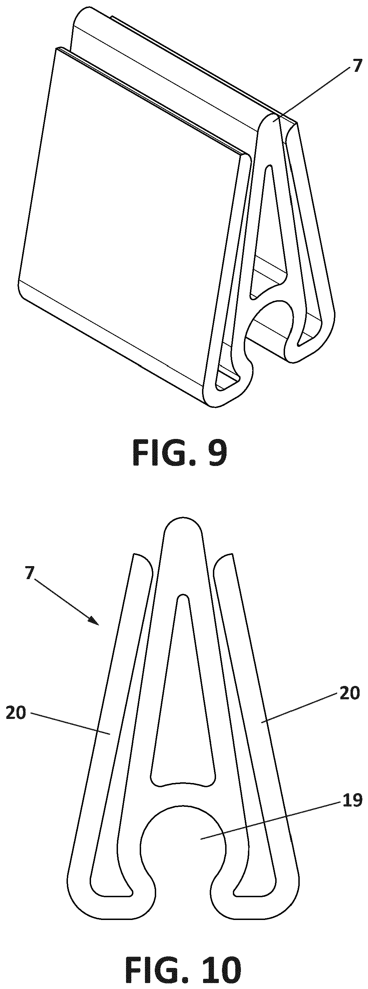

Figures 9 and 10 illustrate one of the lower clips (7), for fixing and adjusting the respective lower ends of the closing slats (4) on the horizontal rod (3) of the base (8) of the frame (1).

The clip (7) comprises a lower coupling (19), essentially circular in cross-section, for coupling with the horizontal rod (3) of the base (8), and two upper flanges (20), inclined inwards, flexible and facing each other, for retaining the lower end of the corresponding locking slat (4). Thanks to this configuration, the elasticity is achieved only in the insertion direction as it comprises two flat surfaces facing each other.

It is envisaged that the kit comprises an equal number of locking slats (4) and clips (7).

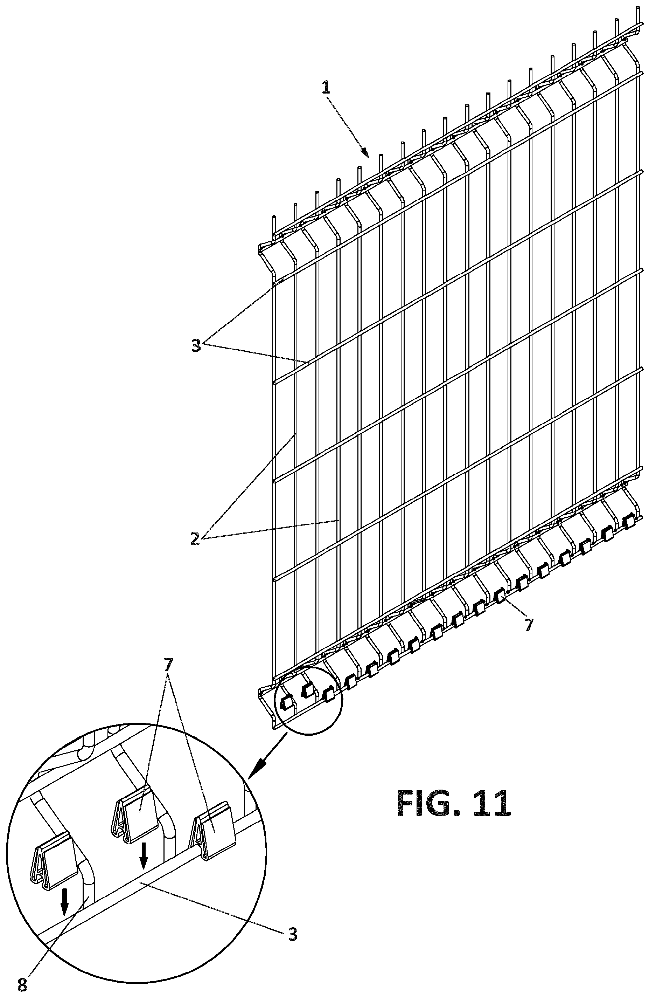

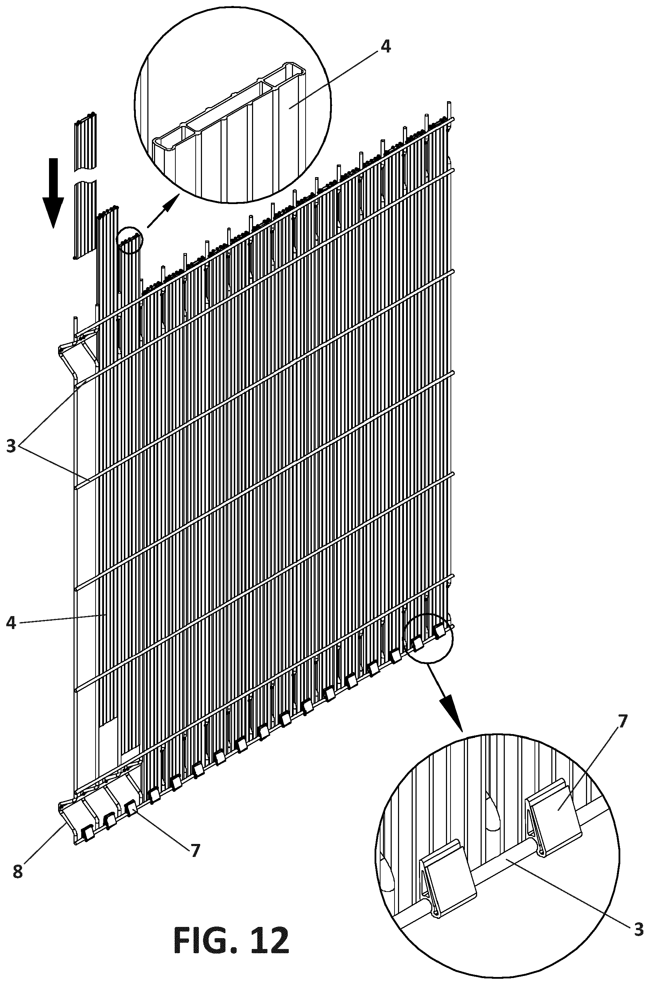

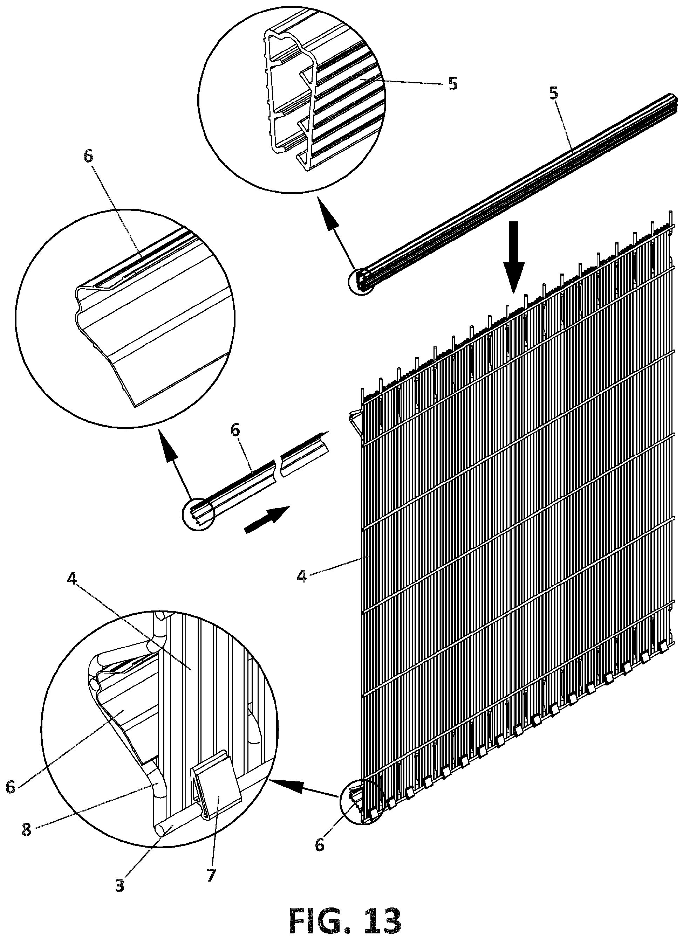

Figures 11-13 illustrate the different stages of the kit assembly sequence. Once the frame (1) is in place, the clips (7) are attached to the horizontal rod (3) of the base (8). Subsequently, the locking slats (4) are inserted, which slide vertically downwards from the top of the frame (1) until they reach the base (8), where they are retained by cooperating with the upper tabs (20) of the clips (7).

Once the frame (1) is completely covered by the locking slats (4), thus preventing the view between the two sides of the fencing, the upper and lower locking profiles (5) and the transverse reinforcement beams (6) are inserted.

In an alternative example of the kit, not shown in the attached figures, the lower locking and fastening elements consist of a locking profile (5) similar to the one used for locking and fastening the upper ends of the vertical locking slats (4).

## Claims

1. Kit for perimeter fencing of enclosures, comprising:
- a base frame (1), consisting of a rigid mesh made up of a plurality of vertical rods (2) and horizontal rods (3) interlaced and linked together, and a base (8) for support and stabilization on the ground;
- vertical locking slats (4), which can be inserted into the frame (1);
- horizontal locking profiles (5) for locking and securing the upper ends of the locking slats (4);
- transverse reinforcement beams (6), which can be attached transversely to the locking slats (4) and to the frame (1); and
- lower locking and fastening elements for connecting the respective lower ends of the locking slats (4) to the lower end of the frame (1) and for keeping them in a vertical position;
**characterised in that** the lower locking and fastening elements are elastic clips (7), wherein each of the clips (7) comprises:
- a lower coupling (19), of essentially circular cross-section for coupling with the horizontal rod (3) of the base (8), and
- two upper flanges (20), inclined inwards, flexible and facing each other, for retaining the lower end of the corresponding locking slat (4).

2. Kit for perimeter fencing according to claim 1 wherein the locking slats (4) have a grooved outer surface and an inner housing in which transverse partitions (9) are arranged.

3. Kit for perimeter fencing according to any of the preceding claims, wherein the locking profiles (5) comprise two inwardly inclined side wings (10), linked together at their respective upper ends by means of a perpendicular central section (11) with a convex curved area (12) in its central sector, and wherein:
- each side wing (10) has an inner face (13) from which oblique flanges (14) are fitted for coupling with the horizontal rods (3) of the frame (1); and
- the outer face (15) of each side wing (9) has a knurled surface to facilitate handling.

4. Kit for perimeter fencing according to any of the preceding claims wherein the transverse reinforcing beams (6) are formed from a V-shaped profile comprising two symmetrical skids (16), inclined outwards and joined together at one end by means of a convex curved web (17).

5. Kit for perimeter fencing according to claim 4 where each of the skids (16) has an intermediate angle (18) and a reduction in thickness, which act synergistically as a spring to facilitate the coupling of the beam (6) with the locking slats (4) and the frame (1).

## Patentansprüche

1. Zaunanlagenbausatz für Einzäunungen, umfassend:
- einen Basisrahmen (1), der aus einem starren Gitter, das aus einer Vielzahl von vertikalen Stäben (2) und horizontalen Stäben (3), die miteinander verflochten und verbunden sind, hergestellt ist, und einer Basis (8) zum Abstützen und Stabilisieren auf dem Boden besteht;
- vertikale Verriegelungslatten (4), die in den Rahmen (1) eingesetzt sein können;
- horizontale Verriegelungsprofile (5) zum Verriegeln und Sichern der oberen Enden der Verriegelungslatten (4);
- Querverstärkungsbalken (6), die quer an den Verriegelungslatten (4) und an dem Rahmen (1) befestigt sein können; und
- untere Verriegelungs- und Befestigungselemente zum Verbinden der jeweiligen unteren Enden der Verriegelungslatten (4) mit dem unteren Ende des Rahmens (1) und zum Halten derselben in einer vertikalen Position; **dadurch gekennzeichnet, dass** die unteren Verriegelungs- und Befestigungselemente elastische Klammern (7) sind, wobei jede der Klammern (7) umfasst:
- eine untere Kopplungseinrichtung (19) mit im Wesentlichen kreisförmigem Querschnitt zum Koppeln mit dem horizontalen Stab (3) der Basis (8), und
- zwei obere Schenkel (20), die nach innen geneigt, flexibel und einander zugewandt sind, zum Halten des unteren Endes der entsprechenden Verriegelungslatte (4).

2. Zaunanlagenbausatz nach Anspruch 1, wobei die Verriegelungslatten (4) eine gerillte Außenfläche und ein inneres Gehäuse aufweisen, in dem Quertrennwände (9) angeordnet sind.

3. Zaunanlagenbausatz nach einem der vorhergehenden Ansprüche, wobei die Verriegelungsprofile (5) zwei nach innen geneigte Seitenflügel (10) umfassen, die an ihren jeweiligen oberen Enden mittels eines senkrechten Mittelabschnitts (11), der einen konvex gekrümmten Bereich (12) in seinem Mittelabschnitt aufweist, miteinander verbunden sind, und wobei:
- jeder Seitenflügel (10) eine Innenfläche (13) aufweist, von der schräge Schenkel (14) zum Koppeln mit den horizontalen Stäben (3) des Rahmens (1) angebracht sind; und
- die Außenfläche (15) jedes Seitenflügels (9) eine gerändelte Oberfläche aufweist, um die Handhabung zu erleichtern.

4. Zaunanlagenbausatz nach einem der vorhergehenden Ansprüche, wobei die Querverstärkungsbalken (6) aus einem V-förmigen Profil gebildet sind, das zwei symmetrische Gleitstücke (16) umfasst, die nach außen geneigt und an einem Ende mittels eines konvex gekrümmten Stegs (17) miteinander verbunden sind.

5. Zaunanlagenbausatz nach Anspruch 4, wobei jedes der Gleitstücke (16) einen Zwischenwinkel (18) und eine Dickenreduktion aufweist, die synergistisch als Feder wirken, um das Koppeln des Balkens (6) mit den Verriegelungsleisten (4) und dem Rahmen (1) zu erleichtern.

## Revendications

1. Kit pour clôture périmétrique d'enclos, comprenant :
- un cadre de base (1), constitué d'un maillage rigide composé de plusieurs tiges verticales (2) et tiges horizontales (3) entrelacées et reliées entre elles, ainsi qu'une base (8) pour le support et la stabilisation au sol ;
- des lamelles de verrouillage verticales (4), pouvant être insérées dans le cadre (1) ;
- des profils de verrouillage horizontaux (5) pour verrouiller et sécuriser les bords supérieurs des lamelles de verrouillage (4) ;
- des poutres de renfort transversales (6), pouvant être fixées transversalement aux lamelles de verrouillage (4) et au cadre (1) ; et
- des éléments de verrouillage et de fixation inférieurs pour connecter les bords inférieurs respectifs des lamelles de verrouillage (4) au bord inférieur du cadre (1) et pour les maintenir en position verticale ; **caractérisé en ce que** les éléments de verrouillage et de fixation inférieurs sont des clips élastiques (7), chacun des clips (7) comprenant :
- un accouplement inférieur (19), de section transversale essentiellement circulaire pour l'accouplement avec la tige horizontale (3) de la base (8), et
- deux brides supérieures (20), inclinées vers l'intérieur, flexibles et faisant face l'une à l'autre, pour retenir le bord inférieur de la lamelle de verrouillage correspondante (4).

2. Kit pour clôture périmétrique selon la revendication 1, dans lequel les lamelles de verrouillage (4) ont une surface extérieure striée et un logement interne dans lequel des cloisons transversales (9) sont disposées.

3. Kit pour clôture périmétrique selon l'une des revendications précédentes, dans lequel les profils de verrouillage (5) comprennent deux ailes latérales (10) inclinées vers l'intérieur, reliées entre elles à leurs bords supérieurs respectifs par une section centrale perpendiculaire (11) avec une zone courbée convexe (12) dans son secteur central, et dans lequel :
- chaque aile latérale (10) possède une face interne (13) à partir de laquelle des brides obliques (14) sont adaptées pour l'accouplement avec les tiges horizontales (3) du cadre (1) ; et
- la face externe (15) de chaque aile latérale (9) présente une surface moletée pour faciliter la prise en main.

4. Kit pour clôture périmétrique selon l'une des revendications précédentes, dans lequel les poutres de renfort transversales (6) sont formées à partir d'un profil en forme de V comprenant deux patins symétriques (16), inclinés vers l'extérieur et reliés entre eux à une extrémité par une nervure courbée convexe (17).

5. Kit pour clôture périmétrique selon la revendication 4, dans lequel chacun des patins (16) présente un angle intermédiaire (18) et une réduction d'épaisseur, qui agissent de manière synergique comme un ressort pour faciliter l'accouplement de la poutre (6) avec les lamelles de verrouillage (4) et le cadre (1).
